# EUROPÄISCHE PATENTSCHRIFT

(11) **EP 2 092 622 B1**
(45) Veröffentlichungstag und Bekanntmachung des Hinweises auf die Patenterteilung: **30.08.2017**
(21) Anmeldenummer: 06846952.7
(22) Anmeldetag: 21.12.2006
(51) Int. Cl.: H02H 7/12, H02M 1/32, H02M 5/458, H02M 7/5387, H02M 7/483

(54) **STROMRICHTER MIT KURZSCHLUSSSTROMBEGRENZUNG**
RECTIFIER WITH SHORT CIRCUIT CURRENT LIMITING
CONVERTISSEUR AVEC LIMITATION DU COURANT DE COURT-CIRCUIT

(43) Veröffentlichungstag der Anmeldung: 26.08.2009
(73) Patentinhaber: Siemens Aktiengesellschaft, 80333 München (DE)
(72) Erfinder: DOMMASCHK, Mike, 01945 Guteborn (DE); DORN, Jörg, 96155 Buttenheim (DE); EULER, Ingo, 91056 Erlangen (DE); LANG, Jörg, 95346 Stadtsteinach (DE); TU, Quoc-Buu, 90574 Rosstal (DE); WÜRFLINGER, Klaus, 90419 Nürnberg (DE)
(86) Internationale Anmeldenummer: PCT/DE2006/002321
(87) Internationale Veröffentlichungsnummer: WO 2008/074273

(56) Entgegenhaltungen:
- EP-A- 1 646 120
- DE-A1- 4 435 255
- DE-A1- 19 726 765
- US-A1- 2006 146 508

## Beschreibung

Die Erfindung betrifft eine Vorrichtung zum Umrichten eines elektrischen Stromes mit wenigstens einem Phasenmodul, das einen Wechselspannungsanschluss und wenigstens einen Gleichspannungsanschluss aufweist, wobei Halbleitermodule in Reihenschaltung aufweisende Halbleiterventile zum Schalten des elektrischen Stromes zwischen dem Wechselspannungsanschluss und jedem Gleichspannungsanschluss und wenigstens ein Energiespeicher zum Speichern elektrischer Energie vorgesehen ist.

Eine solche Vorrichtung ist aus der DE 43 30 381 A1 bereits bekannt. Dort sind zwei gleichspannungsseitig miteinander verbundene Stromrichter beschrieben, wobei Halbleiterventile zum Schalten eines elektrischen Stromes vorgesehen sind. Die Halbleiterventile bestehen aus einer Reihenschaltung von Submodulen, wobei jedes Submodul wenigstens ein Halbleitermodul aufweist, das einen abschaltbaren Leistungshalbleiter und eine antiparallel dazu geschaltete Freilaufdiode umfasst. Im Gleichspannungskreis ist ein zentraler Kondensator vorgesehen. Im Falle eines Nichtabschaltens eines Leistungshalbleiters, beispielsweise bei einem Abschaltversagen des Leistungshalbleiters durch einen Fehler, kann im Zweig des gestörten Leistungshalbleiters ein Brückenkurzschluss entstehen, durch den der oder die Zwischenkondensatoren sofort entladen werden. Dies kann zu einem Lichtbogen im Stromrichter und somit zur Explosion des gesamten Stromrichters führen. Zur Vermeidung oder zumindest zur Verringerung der negativen Auswirkungen der Explosion ist in der DE 43 30 381 A1 ein so genannter reversibler Kurzschlussstrombegrenzer beschrieben, der in Reihe zu dem oder den Kondensatoren des Gleichspannungszwischenkreises angeordnet ist. Der reversible Kurzschlussstrombegrenzer weist neben Varistoren und Ohmschen Widerständen einen Kaltleiter auf. Die Ansprechzeit des oder der Kaltleiter, also die vergehende Zeit bis zur Vergrößerung des Widerstandes durch einen vom Kurzschlussstrom hervorgerufenen Temperaturanstieg, beträgt etwa 100 µs. Aufgrund dieser langen Ansprechzeit kann eine Zerstörung der Halbleitermodule allerdings nicht in jedem Fall sicher vermieden werden, da diese bereits nach einer kürzeren Zeitdauer eintreten kann.

Eine weitere artgemäße Vorrichtung mit parallel zueinander geschalteten Halbleitergruppen ist aus der DE 4435255 A1 bekannt.

Aufgabe der Erfindung ist es daher eine Vorrichtung der eingangs genannten Art bereitzustellen, mit der die negativen Auswirkungen eines Brückenkurzschlusses wirksam und zuverlässig herabgesetzt werden können.

Die Erfindung löst diese Aufgabe dadurch, dass jedes Halbleitermodul parallel zueinander geschaltete Halbleitergruppen aufweist, wobei jede Halbleitergruppe des Halbleitermoduls über einen eigenen separaten Halbleitergruppenstrompfad mit wenigstens einem der Energiespeicher verbunden ist, und wobei jeder Energiespeicher aus parallel zueinander geschalteten Subenergiespeichern besteht, wobei jeder Subenergiespeicher über einen eigenen separaten Halbleitergruppenstrompfad mit der Halbleitergruppe verbunden ist.

Der Erfindung liegt die Erkenntnis zugrunde, dass die Auswirkungen eines Brückenkurzschlusses durch Herabsetzung der im entstehenden Lichtbogen umgesetzten Energie wirksam unterdrückt werden können. Dies kann im Rahmen der Erfindung dadurch erfolgen, dass ein nennenswerter Teil der Energie des Energiespeichers von der im Kurzschlussfall auftretenden Fehlstelle fern gehalten oder zumindest dafür Sorge getragen wird, dass die gleiche Energie im Lichtbogen über einen längeren Zeitraum umgesetzt wird, so dass die Lichtbogenleistung verringert ist. Dies kann beispielsweise durch eine Vergrößerung des Ohmschen Widerstandes oder durch eine Vergrößerung der Induktivität des Kurzschlusszweiges herbeigeführt werden. Die Vergrößerung des Ohmschen Widerstandes und der Induktivität im Kurzschlusszweig wird durch die separate elektrische Anbindung des oder der Energiespeicher an Halbleitergruppen bereitgestellt. Dies ist auch deswegen vorteilhaft, weil die markterhältlichen Halbleitermodule typischerweise bereits parallel geschaltete Halbleitergruppen aufweisen. Die besagten Halbleitergruppen eines Halbleitermoduls verfügen beispielsweise über eine gemeinsame Steuerleitung und sind daher nur gemeinsam durch zweckmäßige Steuersignale von einer Durchgangsstellung, in der ein Stromfluss über die Leistungshalbleiter oder Halbleiter möglich ist, in eine Sperrstellung überführbar, in der ein Stromfluss über die Halbleiter unterbrochen ist. Ein Fehler des Halbleitermoduls beim Abschalten liegt üblicherweise nur in einer der Halbleitergruppen des Halbleitermoduls vor. Im Kurzschlussfall wird der Kurzschlussstrom daher im Wesentlichen zunächst nur von einer Halbleitergruppe geführt. Durch die abschnittsweise elektrisch separate Verbindung jeder Halbleitergruppe mit dem Energiespeicher des Stromrichters ist trotz einer niederohmschen und niederinduktiven Verschienung der gesamten Vorrichtung im Normalbetrieb der Widerstand und die Induktivität im entstehenden Fehlerzweig größer, da dem hohen Kurzschlussstrom auf einer gewissen Länge des Kurzschlusszweiges ein nur geringer Leiterquerschnitt zur Verfügung steht und der Strompfad für den Fehlerstrom eine vergrößerte Induktivität aufweist. Der Fehlerstrom ist daher insgesamt verringert, wobei gleichzeitig die im Lichtbogen umgesetzte Leistung herabgesetzt ist. Die Halbleitermodule umfassen die gemeinsam ansteuerbaren Halbleitergruppen. Darüber hinaus können die Halbleitermodule auch die gegensinnige Freilaufdiode aufweisen. Ein Submodul umfasst wenigstens ein Halbleitermodul.

Vorteilhafterweise besteht zumindest jeder Halbleitergruppenstrompfad abschnittsweise aus Edelstahl. Durch die Verwendung von Edelstahl an Stelle des üblicherweise verwendeten Kupfers wird der Ohmsche Widerstand noch weiter erhöht mit einer verbesserten Kurzschlussstrombegrenzung im Gefolge.

Gemäß der Erfindung besteht jeder Energiespeicher aus parallel zueinander geschalteten Subenergiespeichern, wobei jeder Subenergiespeicher über einen eigenen separaten Halbleitergruppenstrompfad mit einer Halbleitergruppe verbunden ist. In der Praxis der Energieübertragung und -verteilung bestehen Energiespeicher, wie Kondensatoren, häufig aus einer Parallelschaltung verschiedener Subenergiespeicher, wobei die Energiespeicher über mehrere Anschlussklemmen mit einem Pol des Gleichspannungszwischenkreises verbunden sind. Im Rahmen der Erfindung ist die Verbindung der getrennten Anschlüsse der Subenergiespeicher nicht vor den Halbleitergruppen, sondern erst hinter den Halbleitergruppen angeordnet. Im Kurzschlussfall wird daher nur ein Subenergiespeicher entladen, der im Vergleich mit der Summe aller Subenergiespeicher eine geringere Kapazität aufweist und somit weniger Energie gespeichert hat. Auf eine Fehlerstelle im Halbleitermodul wirkt im Kurzschlussfall nur einen Bruchteil der Energie der Energiespeicher.

Falls es schaltungstechnisch erforderlich ist, die Halbleitergruppenstrompfade schon vor den Halbleitermodulen zu verbinden, so kann dies beispielsweise induktiv geschehen. So sind die Halbleitergruppenstrompfade zweckmäßigerweise über Symmetrieimpedanzen miteinander verbunden. Die Symmetrieimpedanzen sind beispielsweise ein Bestandteil des Submoduls. Abweichend hiervon sind die Symmetrieimpedanzen als Zweigdrosseln im Stromrichter vorgesehen. Die in den nicht mit der Fehlstelle verbundenen Energiespeichern gespeicherte Energie wird in diesem Fall größtenteils in den Symmetrieimpedanzen umgesetzt. Diese Symmetrieimpedanzen dienen üblicherweise zur Symmetrierung der an den Energiespeichern jeweils abfallenden Spannung.

Zweckmäßigerweise umfassen die Symmetrieimpedanzen Widerstände, Induktivitäten und/oder eine Kombination von Widerständen und Induktivitäten.

Zweckmäßigerweise ist ein zentraler Energiespeicher vorgesehen, der mit dem Gleichspannungsanschluss verbunden ist. Spannungszwischenkreisstromrichter mit einem zentralen Energiespeicher sind bereits seit Langem bekannt und auf dem Markt erhältlich.

Abweichend davon können die Halbleiterventile jedoch eine Reihenschaltung aus Submodulen umfassen, wobei jedes Submodul wenigstens ein Halbleitermodul sowie einen Energiespeicher aufweist. Gemäß dieser vorteilhaften Weiterentwicklung sind die Energiespeicher auf die Halbleitermodule verteilt, so dass ein so genannter Multilevel-Stromrichter bereitgestellt ist.

Weitere Vorteile und Ausgestaltungen der Erfindung sind Gegenstand der Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel einer Vorrichtung gemäß dem Stand der Technik in schematischer Darstellung,
- Figur 2: ein Ausführungsbeispiel der erfindungsgemäßen Vorrichtung in schematischer Darstellung,
- Figur 3: eine detailliertere Ansicht eines Halbleitermoduls,
- Figur 4: ein Beispiel zur Verschienung des aus Halbleitergruppen bestehenden Halbleitermoduls und
- Figur 5: ein weiteres Ausführungsbeispiel der Erfindung mit Subenergiespeichern zeigen.

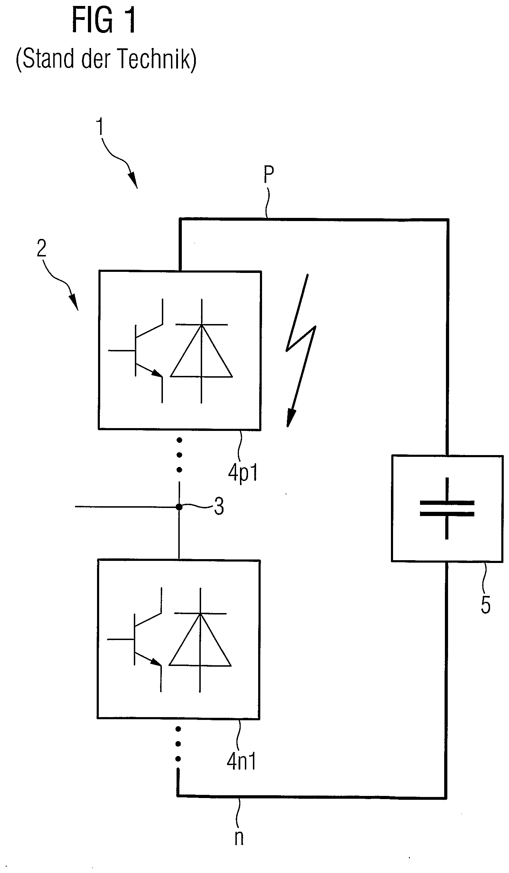

Figur 1 zeigt ein Ausführungsbeispiel einer Vorrichtung gemäß dem Stand der Technik. Der dort dargestellte Stromrichter 1 weist ein Phasenmodul 2 auf, das über zwei Gleichspannungsanschlüsse p und n verfügt. Ferner ist ein Wechselspannungsanschluss 3 erkennbar, wobei sich zwischen dem Wechselspannungsanschluss 3 und dem Gleichspannungsanschluss p ein Halbleiterventil 4p1 und zwischen dem negativen Gleichspannungsanschluss n und dem Wechselspannungsanschluss 3 ein weiteres Halbleiterventil 4n1 erstreckt. In Figur 1 ist aus Gründen der Übersichtlichkeit lediglich ein Phasenmodul 2 dargestellt. Es sei jedoch darauf hingewiesen, dass für jede Phase des an den Stromrichter 1 angeschlossenen Wechselspannungsnetzes ein Phasenmodul 2 vorgesehen ist, wobei alle Phasenmodule 2 identisch zu dem in Figur 1 gezeigten Phasenmodul aufgebaut sind. Durch die Halbleiterventile ist in der Regel eine Brückenschaltung realisiert. Neben den Phasenmodulen 2 umfasst die Vorrichtung 1 gemäß Figur 1 ferner einen als Kondensator 5 ausgestalteten zentralen Energiespeicher im Gleichspannungskreis p,n.

Jedes Halbleiterventil 4p1 besteht im dem gezeigten Beispiel aus einer Reihenschaltung von Submodulen, die hier jeweils ein Halbleitermodul mit abschaltbaren Leistungshalbleitern aufweisen, wobei jedem abschaltbaren Leistungshalbleiter eine Freilaufdiode antiparallel geschaltet ist, wie dies durch die Schaltzeichen in Figur 1 angedeutet ist. Die Anzahl der in Reihe geschalteten Halbleitermodule ist von den jeweils herrschenden Spannungen im Gleichspannungskreis abhängig.

In Figur 1 ist durch den gezackten Pfeil angedeutet, dass ein Brückenkurzschluss aufgetreten ist. So ist es beispielsweise möglich, dass eines der Halbleitermodule nicht mehr abgeschaltet werden kann und keinen Beitrag zur Spannungsfestigkeit des Halbleiterventiles 4p1 liefert. Die Spannung zwischen dem Wechselspannungsanschluss 3 und dem Gleichspannungsanschluss p fällt somit an den verbleibenden intakten Halbleitermodulen ab. Im vorliegenden Fall ist die Anzahl der verbleibenden intakten Halbleitermodule nicht in der Lage, die anliegende Spannung sicher zu sperren. Mit anderen Worten ist der Wechselspannungsanschluss 3 auf das Potenzial des positiven Gleichspannungsanschlusses p gelegt. Überführt die Regelung des Stromrichters das Halbleiterventil 4n1 in seine Durchgangsstellung, kommt es zu einem Brückkurzschluss, so dass der zentrale Kondensator 5 sofort entladen wird. Werden gebondete Halbleitermodule eingesetzt, werden die Bonddrähte des Halbleitermoduls verdampft, wobei ein Lichtbogen entsteht, in dem die Kondensatorenergie innerhalb weniger Mikrosekunden vollständig umgesetzt wird. Das Halbleitermodul explodiert mit einem Ausfall des Stromrichters 1 im Gefolge.

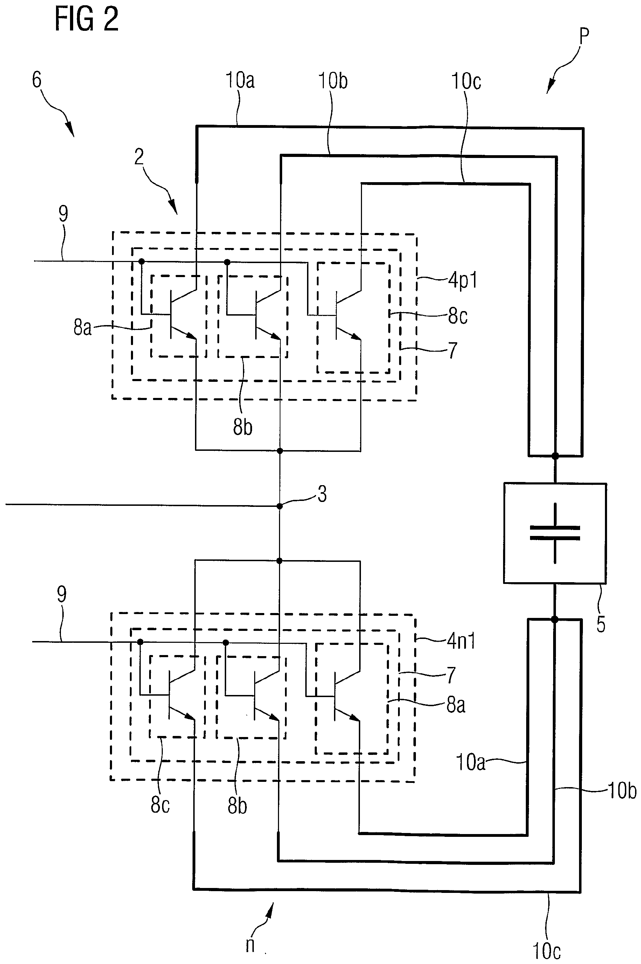

Figur 2 zeigt ein Ausführungsbeispiel der erfindungsgemäßen Vorrichtung 6. Es ist erkennbar, dass das Halbleiterventil 4p1 beziehungsweise 4n1 aus von in Reihe zueinander geschalteten Halbleitermodulen 7 besteht, wobei jedoch aus Gründen der Übersichtlichkeit in Figur 2 nur jeweils ein Halbleitermodul 7 je Halbleiterventil 4p1 beziehungsweise 4n1 dargestellt ist. Es ist ferner erkennbar, dass jedes Halbleitermodul 7 aus drei parallel zueinander geschalteten Halbleitergruppen 8a,8b,8c besteht, wobei die Halbleitergruppen 8a,8b,8c eines Halbleitermoduls 7 über eine gemeinsame Steuerleitung 9 nur gemeinsam von einer Sperrstellung in eine Durchgangsstellung beziehungsweise von einer Durchgangsstellung in ihre Sperrstellung überführbar sind. Die Halbleitergruppen 8a,8b,8c umfassen abschaltbare Leistungshalbleiter, beispielsweise so genante GTOs, IGBTs oder dergleichen. Jedem dieser abschaltbaren Leistungshalbleiter ist eine in der Figur 2 figürlich nicht dargestellte Freilaufdiode antiparallel geschaltet, wie das in Figur 1 bereits angedeutet wurde. Im Gegensatz zu dem in Figur 1 dargestellten Stand der Technik ist der zentrale Energiespeicher 5 nicht über eine einzige Verbindungsleitung mit den Halbleitermodulen 7 des jeweiligen Halbleiterventiles 6p1 beziehungsweise 6n1 verbunden. Im Rahmen der Erfindung ist der zentrale Energiespeicher 5 über mehrere separate Halbleitergruppenstrompfade 10a, 10b und 10c mit jeweils einer Halbleitergruppe 8a, 8b beziehungsweise 8c verbunden. Ein Fehler tritt in der Regel lediglich in einer Halbleitergruppe 8a,8b,8c auf. Der Kurzschlussstrom ist daher gezwungen lediglich über einen Halbleitergruppenstrompfad zu fließen. Im Fehlerfall der Halbleitergruppe 8b fließt der Kurzschlussstrom daher über den Halbleitergruppenstrompfad 10b. Aufgrund des im Vergleich mit der Summe aller Halbleitergruppenstrompfade verringerten Leiterquerschnittes kommt es zu einer Erhöhung der Induktivität und des Ohmschen Widerstandes und somit zu einer Verringerung der im Lichtbogen umgesetzten Energie und Leistung. Die Auswirkungen eines Lichtbogens beziehungsweise einer hierdurch verursachten Explosion werden daher erfindungsgemäß abgeschwächt.

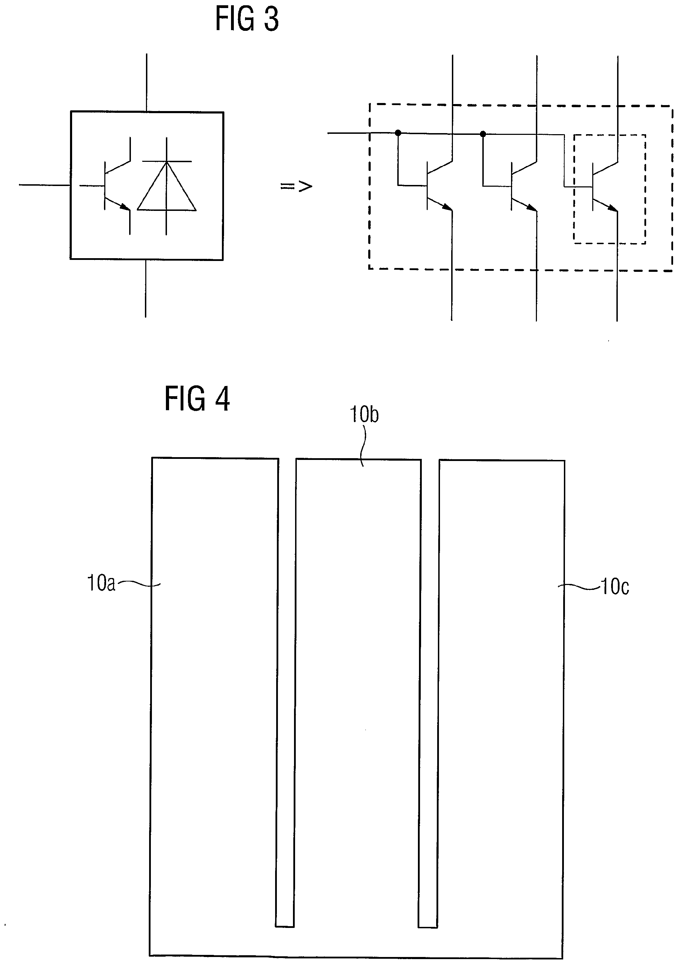

Figur 3 verdeutlicht noch einmal, dass die markterhältlichen Halbleitermodule üblicherweise aus parallel geschalteten Halbleitergruppen bestehen, die bereits mit separaten Anschlussklemmen ausgerüstet sind. Im rechten Teil der Figur 3 wurden die antiparallel zu den jeweiligen abschaltbaren Leistungshalbleitern angeordneten Freilaufdioden aus Gründen der Übersichtlichkeit nicht dargestellt.

Figur 4 zeigt ein geschlitztes Anschlussblech, mit dem die Halbleitergruppenstrompfade 10a, 10b und 10c beispielsweise realisiert sind.

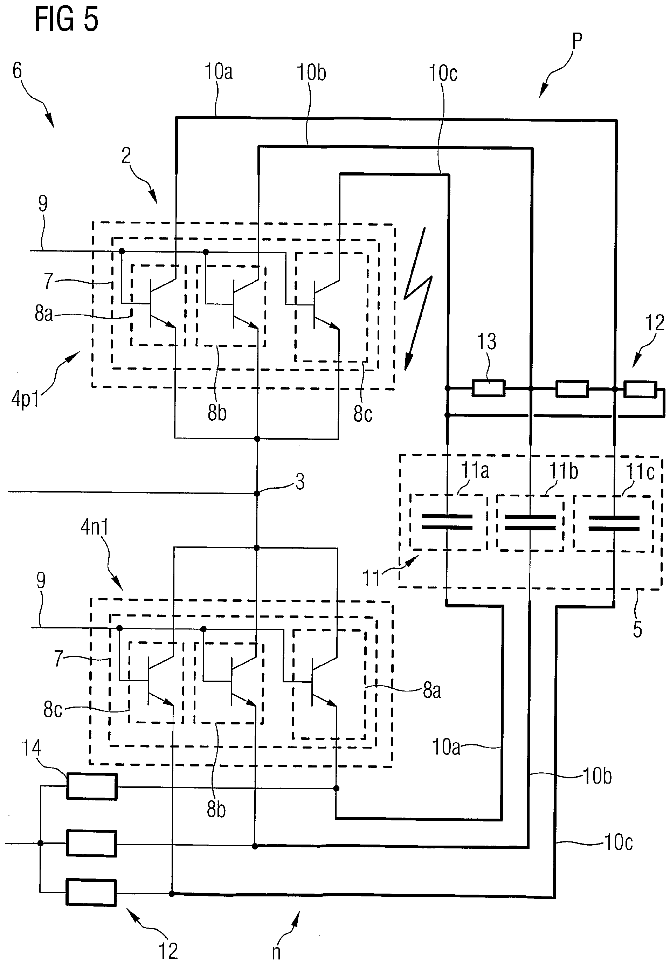

Figur 5 zeigt ein weiteres Ausführungsbeispiel der Erfindung, wobei jedoch der zentrale Energiespeicher 5 aus parallel zueinander angeordneten Subenergiespeichern 11a, 11b und 11c besteht. Dabei ist jeder Subenergiespeicher 11a, 11b beziehungsweise 11c mit einer Halbleitergruppe 8a, 8b beziehungsweise 8c über einen separaten Halbleitergruppenstrompfad 10a, 10b beziehungsweise 10c verbunden. Tritt ein Fehler in der Halbleitergruppe 8b auf, wird nur die in dem Energiespeicher 11b gespeicherte Energie, nicht aber die Gesamtenergie aller Energiespeicher im Lichtbogen umgesetzt.

Zwischen den Halbleiterstrompfaden sind Symmetrieimpedanzen 12 angeordnet. Diese Symmetrieimpedanzen 12 umfassen Ohmsche Widerstände oder Induktivitäten 13. Bei Entladung eines Subenergiespeichers, beispielsweise des Subenergiespeichers 11b, in Folge eines Kurzschlusses der Halbleitergruppe 8c kommt es zu einem Ausgleich der in dem Energiespeichern 11a und 11c gespeicherten Energie über die Symmetrieimpedanzen 12.

Abweichend zu dem in den Figuren 2 und 5 gezeigten Ausführungsbeispielen ist es im Rahmen der Erfindung auch möglich, die Energiespeicher in den Halbleiterventilen zu verteilen. In diesem Fall weist jedes Halbleiterventil eine Reihenschaltung aus Submodulen auf. Dabei umfasst jedes Submodul neben wenigstens einem Halbleitermodul einen Subenergiespeicher. Die Reihenschaltung von Halbleitermodulen innerhalb eines Halbleiterventils bleibt jedoch auch bei solchen so genannten Multilevel-Stromrichtern erhalten.

## Patentansprüche

1. Vorrichtung (6) zum Umrichten eines elektrischen Stromes mit wenigstens einem Phasenmodul (2), das einen Wechselspannungsanschluss (3) und wenigstens einen Gleichspannungsanschluss (p,n) aufweist, wobei Halbleitermodule (7) in Reihenschaltung aufweisende Halbleiterventile zum Schalten des elektrischen Stromes zwischen dem Wechselspannungsanschluss (3) und jedem Gleichspannungsanschluss (p,n) und wenigstens ein Energiespeicher (5) zum Speichern elektrischer Energie vorgesehen ist, wobei jedes Halbleitermodul (7) parallel zueinander geschaltete Halbleitergruppen (8a,8b,8c) aufweist,
**dadurch gekennzeichnet, dass** jede Halbleitergruppe (8a,8b,8c) des Halbleitermoduls (7) über einen eigenen separaten Halbleitergruppenstrompfad (10a, 10b, 10c) mit wenigstens einem der Energiespeicher (5) verbunden ist, wobei jeder Energiespeicher (5) aus parallel zueinander geschalteten Subenergiespeichern (11a, 11b, 11c) besteht, wobei jeder Subenergiespeicher (11a, 11b, 11c) über einen eigenen separaten Halbleitergruppenstrompfad (10a, 10b, 10c) mit einer Halbleitergruppe (8a,8b,8c) verbunden ist.

2. Vorrichtung (6) nach Anspruch 1,
**dadurch gekennzeichnet, dass** jeder Halbleitergruppenstrompfad (10a, 10b, 10c) zumindest abschnittsweise aus Edelstahl besteht.

3. Vorrichtung (6) nach Anspruch 1 oder 2,
**dadurch gekennzeichnet, dass** die Halbleitergruppenstrompfade (10a, 10b, 10c) über Symmetrieimpedanzen (12) miteinander verschaltet sind.

4. Vorrichtung (6) nach Anspruch 3,
**dadurch gekennzeichnet, dass** die Symmetrieimpedanzen (12) Widerstände (13), Induktivitäten (14) und/oder eine Kombination von Widerständen und Induktivitäten umfassen.

5. Vorrichtung (6) nach einem der Ansprüche 1 bis 4,
**dadurch gekennzeichnet, dass** die Halbleitergruppenstrompfade (10a, 10b, 10c) über Induktivitäten (14) miteinander verbunden sind.

6. Vorrichtung (6) nach einem der vorhergehenden Ansprüche, **gekennzeichnet durch**
einen zentralen Energiespeicher (5), der mit den Gleichspannungsanschlüssen (p,n) verbunden ist.

7. Vorrichtung (8) nach einem der Ansprüche 1 bis 5,
**dadurch gekennzeichnet, dass** die Halbleiterventile eine Reihenschaltung aus Submodulen umfassen, wobei jedes Submodul wenigstens ein Halbleitermodul sowie einen Energiespeicher aufweist.

## Claims

1. Device (6) for converting an electric current comprising at least one phase module (2) having an AC voltage connection (3) and at least one DC voltage connection (p, n) wherein semiconductor valves which have semiconductor modules (7) connected in series and serve for switching the electric current between the AC voltage connection (3) and each DC voltage connection (p, n) and at least one energy store (5) for storing electrical energy are provided, wherein each semiconductor module (7) has semiconductor groups (8a, 8b, 8c) connected in parallel with one another,
**characterized in that**
each semiconductor group (8a, 8b, 8c) of the semiconductor module (7) is connected to at least one of the energy stores (5) via a dedicated separate semiconductor group current path (10a, 10b, 10c), wherein each energy store (5) comprises sub-energy stores (11a, 11b, 11c) connected in parallel with one another, wherein each sub-energy store (11a, 11b, 11c) is connected to a semiconductor group (8a, 8b, 8c) via a dedicated separate semiconductor group current path (10a, 10b, 10c).

2. Device (6) according to Claim 1,
**characterized in that**
each semiconductor group current path (10a, 10b, 10c) is composed of high-grade steel at least in sections.

3. Device (6) according to Claim 1 or 2,
**characterized in that**
the semiconductor group current paths (10a, 10b, 10c) are connected up to one another via balance impedances (12).

4. Device (6) according to Claim 3,
**characterized in that**
the balance impedances (12) comprise resistances (13), inductances (14) and/or a combination of resistances and inductances.

5. Device (6) according to any of Claims 1 to 4,
**characterized in that**
the semiconductor group current paths (10a, 10b, 10c) are connected to one another via inductances (14).

6. Device (6) according to any of the preceding claims,
**characterized by**
a central energy store (5), which is connected to the DC voltage connections (p, n).

7. Device (8) according to any of Claims 1 to 5,
**characterized in that**
the semiconductor valves comprise a series circuit formed by submodules, wherein each submodule has at least one semiconductor module and an energy store.

## Revendications

1. Système (6) pour transformer un courant électrique ayant un module (2) de phase, qui a une borne (3) de tension alternative et au moins une borne (p, n) de tension continue, des soupapes à semiconducteur ayant des modules (7) à semiconducteur en circuit série étant prévues pour faire passer le courant électriques entre la borne (3) de tension alternative et chaque borne (p, n) de tension continue et au moins un accumulateur (5) d'énergie est prévu pour accumuler de l'énergie électrique, chaque module (7) à semiconducteur ayant des groupes (8a, 8b, 8c) à semiconducteur montés en parallèle entre eux,
**caractérisé en ce que**
chaque groupe (8a, 8b, 8c) à semiconducteur du module (7) à semiconducteur est relié à au moins l'un des accumulateurs (5) d'énergie par un trajet (10a, 10b, 10c) propre distinct de courant de groupe à semiconducteur, chaque accumulateur (5) d'énergie étant constitué de sous-accumulateurs (11a, 11b, 11c) d'énergie montés en parallèle entre eux, chaque sous-accumulateur (11a, 11b, 11c) d'énergie étant relié à un groupe (8a, 8b, 8c) à semiconducteur par un trajet de courant propre distinct de groupe à semiconducteur.

2. Système (6) suivant la revendication 1,
**caractérisé en ce que**
chaque trajet (10a, 10b, 10c) de courant de groupe à semiconducteur est au moins par tronçon en acier fin.

3. Système (6) suivant la revendication 1 ou 2,
**caractérisé en ce que**
les trajets (10a, 10b, 10c) de courant de groupe à semiconducteur sont connectés entre eux par des impédances (12) de symétrie.

4. Système (6) suivant la revendication 3,
**caractérisé en ce que**
les impédances (12) de symétrie comprennent des résistances (13), des inductances (14) et/ou une combinaison de résistances et d'inductances.

5. Système (6) suivant l'une des revendications 1 à 4,
**caractérisé en ce que**
les trajets (10a, 10b, 10c) de courant de groupe à semiconducteur sont reliés entre eux par des inductances (14).

6. Système (6) suivant l'une des revendications précédentes,
**caractérisé par**
un accumulateur (5) central d'énergie, qui est relié aux bornes (p, n) de tension continue.

7. Système (6) suivant l'une des revendications 1 à 5,
**caractérisé en ce que**
les soupapes à semiconducteur comprennent un circuit série composé de sous-modules, chaque sous-modules ayant au moins un module à semiconducteur, ainsi qu'un accumulateur d'énergie.
